# EUROPEAN PATENT APPLICATION

(11) **EP 4 640 536 A1**
(43) Date of publication of application: **29.10.2025**
(21) Application number: 23905360.6
(22) Date of filing: 26.09.2023
(51) Int. Cl.: B62D 37/02, B62D 35/00, B62D 35/02

(54) **SPOILER APPARATUS FOR VEHICLE AND VEHICLE**

(30) Priority: 23.12.2022 CN 202223455191 U
(71) Applicant: Nio Technology (Anhui) Co., Ltd, Hefei City, Anhui 230601 (CN)
(72) Inventor: WANG, Yi, Shanghai 201804 (CN)
(74) Representative: Vossius & Partner Patentanwälte Rechtsanwälte mbB
(86) International application number: PCT/CN2023/121470
(87) International publication number: WO 2024/131186

(57) **Abstract**

Provided are a spoiler device (1) for a vehicle and a vehicle. The spoiler device (1) includes: a base holder (10) adapted to be fixed to the vehicle and including a drain recess (11); a linkage assembly (20) arranged in the drain recess (11) and including an input shaft (21); an actuator (30) fixed below the base holder (10) and located outside the drain recess (11), the actuator (30) being connected to the linkage assembly (20) by the input shaft (21) and capable of driving the input shaft (21) to rotate; and a position sensor (40) located between the drain recess (11) and the actuator (30), where the position sensor (40) can detect a position of the linkage assembly (20) and send a position signal to a control end of the vehicle, so that the control end controls the actuator (30) to drive the linkage assembly (20) to extend or retract based on the position signal. By arranging the position sensor (40) outside the drain recess (11) and apart from the actuator (30), the spoiler device (1) improves stability of its use environment, and solves compatibility issues between the linkage assembly (20) and the actuator (30).

## Description

### Reference to Priority Application

This application claims priority to Chinese patent application No. 202223455191.X, filed on December 23, 2022, which is incorporated herein by reference in its entirety.

### Technical Field

The invention relates to the field of vehicles, and in particular, to a spoiler device for a vehicle and a vehicle.

### Technical Background

With continuous improvement of living standards, vehicles have become one of the most important travel tools for people. A vehicle generally refers to a non-rail-borne vehicle with four or more wheels, driven by a power source (e.g., fuel, hybrid power, and pure electric power), having main functions including transportation, carrying passengers, and logistics, etc. Vehicles bring convenience, comfort and safety to people during travel, while also promoting development of industries, accelerating economic growth, and changing people's lifestyles.

With the advancement of the vehicle technology and continuous optimization of highways, driving speeds of vehicles have greatly increased, and therefore more and more vehicles are equipped with spoiler devices. A function of the vehicle spoiler device is to make air resistance form a downward pressure when the vehicle is traveling at a high speed, so as to counteract the lift as much as possible, so that the vehicle has a better roadholding performance and can maintain stability at high speeds.

An active rear spoiler device has been developed in the prior art. The active rear spoiler device is a spoiler device that can be dynamically adjusted based on a current vehicle working condition to change aerodynamic effects, strength, or other performance attributes. One of the main transmission components of the active rear spoiler device is a linkage mechanism. To detect a deployment position of the linkage mechanism, a position sensor needs to be integrated. Generally, the position sensor may be arranged on the linkage mechanism nearby or inside an actuator. The disadvantage of the arrangement on the linkage mechanism is that the linkage mechanism is arranged in a drain recess, and the design of the position sensor needs to take a relatively harsh use environment in a wet area (that is, the drain recess) into account, which requires high reliability. In addition, when the design of the linkage mechanism is changed, the layout and design of the position sensor may also be directly affected. The disadvantage of the arrangement inside the actuator is that the actuator has a long development verification cycle and high costs, and is generally not modified after development verification is completed. However, the linkage mechanism needs to be developed based on application requirements. Ranges of deployment positions of different linkage mechanisms are inconsistent, and design positions that need to be detected also varies, leading to challenges in compatibility between the two.

Accordingly, there is a need in the art for a new technical solution to solve the above problem.

### Summary

In order to solve the above technical problem in the prior art, that is, to solve the problem in the prior art that there is a significant limitation in arrangement of a position sensor of a spoiler device, the invention provides a spoiler device for a vehicle. The spoiler device includes: a base holder adapted to be fixed to the vehicle and including a drain recess; a linkage assembly arranged in the drain recess; an actuator fixed below the base holder and located outside the drain recess, the actuator being connected to the linkage assembly by an input shaft and capable of driving the input shaft to rotate; and a position sensor located between the drain recess and the actuator, where the position sensor can detect a position of the linkage assembly and send a position signal to a control end of the vehicle, so that the control end controls the actuator to drive the linkage assembly to extend or retract based on the position signal.

In the spoiler device according to the invention, the actuator can control the linkage assembly to extend upward by driving the input shaft of the linkage assembly to rotate, so as to lift a spoiler plate of the spoiler device, or control the linkage assembly to retract downward so as to lower the spoiler plate of the spoiler device. The position sensor can detect the position of the linkage assembly and send the position signal to the control end of the vehicle, so that a controller controls the actuator to drive the linkage assembly based on the position signal. The position sensor is arranged outside the drain recess, so that an adverse impact of a relatively harsh and humid use environment in the drain recess on the position sensor can be effectively avoided, thereby improving operation reliability of the position sensor. In addition, the position sensor is arranged apart from the actuator, so that the problem of mismatch between development verification cycles of the linkage assembly and the actuator when the position sensor is integrated into the actuator can be solved.

In a preferred technical solution of the above spoiler device for a vehicle, the position sensor includes: a Hall element module fixed to the base holder; and a rotating magnetic element located in the Hall element module and having a magnetic element through-hole, where the input shaft extends through the magnetic element through-hole, and the rotating magnetic element rotates synchronously with the input shaft. Through the above arrangement, the input shaft extends through the magnetic element through-hole such that the rotating magnetic element is connected to the input shaft and can rotate synchronously with the input shaft. The Hall element module can detect a magnetic field signal generated during rotation of the rotating magnetic element. A received magnetic field signal is processed and a corresponding pulse signal (i.e., position signal) is output to the control end of the vehicle through a cable harness, so that a function of the position sensor to detect the position of the linkage assembly is implemented, thereby ensuring reliability of extension or retraction of the linkage assembly in the spoiler device.

In a preferred technical solution of the above spoiler device for a vehicle, an input shaft keyway recessed radially inward from an outer surface of the input shaft is provided in the input shaft; and a magnetic element flat key matching the input shaft keyway is arranged on an inner surface of the magnetic element through-hole. The magnetic element flat key is arranged in the magnetic element through-hole of the rotating magnetic element, and the input shaft keyway matching the magnetic element flat key is provided in the input shaft, so that the rotating magnetic element can rotate synchronously with the input shaft to enable the Hall element module to obtain accurate position signals. Flat key connection has the advantages of simple structure, good alignment, convenient assembly, disassembly and maintenance, etc.

In a preferred technical solution of the above spoiler device for a vehicle, both the Hall element module and the actuator are fixedly connected to the base holder by threaded components. The connection manner by the threaded components has the advantages of simple structure, reliable connection, convenient assembly and disassembly, etc. Through the above arrangement, connection and fixing between the Hall element module and the actuator below the base holder are facilitated, and fixing firmness of the Hall element module and the actuator can be ensured.

In a preferred technical solution of the above spoiler device for a vehicle, the spoiler device further includes: a spoiler plate, where the linkage assembly supports the spoiler plate above the base holder, and the actuator can control lifting and lowering of the spoiler plate based on the position signal. Through the above arrangement, the spoiler plate can be lifted or lowered under the driving of the linkage assembly.

In a preferred technical solution of the above spoiler device for a vehicle, the drain recess includes a first drain recess located at a first end portion of the base holder and a second drain recess located at an opposite second end portion of the base holder; the linkage assembly includes a first linkage mechanism located in the first drain recess and a second linkage mechanism located in the second drain recess, and both the first linkage mechanism and the second linkage mechanism are connected to the spoiler plate; and the input shaft includes a first input shaft connected to the first linkage mechanism and a second input shaft connected to the second linkage mechanism, and both the first input shaft and the second input shaft are connected to an output shaft of the actuator and synchronously rotatable with the output shaft, where the position sensor is arranged on the first input shaft and/or the second input shaft. Through the above arrangement, the first drain recess and the second drain recess on the base holder provide space for arrangement and movement of the first linkage mechanism and the second linkage mechanism, respectively, and can drain accumulated water therein in a timely manner to ensure movement reliability of the first linkage mechanism and the second linkage mechanism. The first linkage mechanism and the second linkage mechanism are respectively fixed to the opposite first end portion and second end portion of the base holder, and the spoiler plate is fixed to the vehicle through the first linkage mechanism and the second linkage mechanism, which helps ensure the reliable and stable fixation of the spoiler plate on the vehicle. The first linkage mechanism is connected to the first input shaft, the second linkage mechanism is connected to the second input shaft, and both the first input shaft and the second input shaft are connected to an output shaft of the actuator. The output shaft of the actuator is controlled to rotate, so that the first input shaft and the second input shaft can rotate synchronously with the output shaft, so as to simultaneously and respectively control the first linkage mechanism and the second linkage mechanism to extend or retract, thereby controlling the spoiler plate to be lifted or lowered. In addition, the position sensor is arranged on the first input shaft and/or the second input shaft, which can not only ensure position detection accuracy, but also solve the problem that there is a significant limitation when the position sensor is arranged in the first drain recess or the second drain recess or is integrated in the actuator.

In a preferred technical solution of the above spoiler device for a vehicle, the output shaft has a first output end and a second output end that are opposite each other; the first input shaft is coaxial with the output shaft and has a first input end and a second input end that are opposite each other, the first input end is connected to the first linkage mechanism, and the second input end is connected to the first output end by a first sleeve; and the second input shaft is coaxial with the output shaft and has a third input end and a fourth input end that are opposite each other, the third input end is connected to the second linkage mechanism, and the fourth input end is connected to the second output end by a second sleeve. Through the above arrangement, the first input shaft, the second input shaft and the output shaft are all aligned on the same axis, the first input shaft is connected to the output shaft by the first sleeve, and the second input shaft is connected to the output shaft by the second sleeve, such that the first input shaft and the second input shaft can rotate synchronously with the output shaft, thereby controlling extension or retraction of the first linkage mechanism and the second linkage mechanism respectively connected to the first input shaft and the second input shaft. The arranged first sleeve and second sleeve can achieve effects of relieving impacts and absorbing vibration, and have the advantages of simple structures, reliable connection, etc.

In a preferred technical solution of the above spoiler device for a vehicle, the first drain recess is provided with a first recess through-hole, the second drain recess is provided with a second recess through-hole, the first input end extends through the first recess through-hole, and the third input end extends through the second recess through-hole. Through the above arrangement, the first input shaft and the second input shaft can respectively drive the first linkage mechanism and the second linkage mechanism to extend or retract, and ensure that the position sensor is arranged in a dry area outside the first drain recess or the second drain recess, so as to ensure stability of a use environment of the position sensor.

In a preferred technical solution of the above spoiler device for a vehicle, a first sealing ring is arranged between the first recess through-hole and the first input end, and a second sealing ring is arranged between the second recess through-hole and the third input end. Through the above arrangement, sealing of the first drain recess and the second drain recess is ensured, and dryness and stability of the environment where the position sensor is located are further ensured.

In order to solve the above technical problem in the prior art, that is, to solve the problem in the prior art that there is a significant limitation in arrangement of a position sensor of a spoiler device, the invention further provides a vehicle. The vehicle includes the spoiler device for a vehicle according to any one of the above implementations. Through the above arrangement, the vehicle according to the invention uses the active spoiler device, and the spoiler device can be dynamically adjusted based on a current vehicle working condition to change aerodynamic effects, strength, etc. The position sensor in the spoiler device is arranged in the dry area outside the drain recess and is arranged apart from the actuator, so that the vehicle according to the invention overcomes the problem that there is a significant limitation in arrangement of the position sensor, and can accurately detect the position of the spoiler plate, thereby better controlling lifting and lowering of the spoiler plate.

### Brief Description of the Drawings

Preferred implementations of the invention are described below with reference to the accompanying drawings, in which:
FIG. 1 is a schematic diagram of an embodiment of a spoiler device according to the invention;
FIG. 2 is a sectional view of an embodiment of a spoiler device according to the invention; and
FIG. 3 is a schematic diagram of a position sensor in an embodiment of a spoiler device according to the invention.

List of reference numerals:
1. Spoiler device; 10. Base holder; 11. Drain recess; 111. First drain recess; 1111. First recess through-hole; 112. First sealing ring; 113. Drain hole; 20. Linkage assembly; 21. Input shaft; 211. First input shaft; 2111. First input end; 2112. Second input end; 2113. Input shaft keyway; 22. First linkage mechanism; 23. Linkage fixing screw; 30. Actuator; 31. Output shaft; 311. First output end; 32. First sleeve; 40. Position sensor; 41. Hall element module; 411. Fixing portion; 412. Module fixing bolt; 413. Initial position marking point; 414. First position marking point; 415. Second position marking point; 416. Third position marking point; 42. Rotating magnetic element; 421. Magnetic element through-hole; 4211. Magnetic element flat key; 422. Pointer mark.

### Detailed Description of Embodiments

Preferred implementations of the invention are described below with reference to the accompanying drawings. It should be understood by those skilled in the art that these implementations are only for explaining the technical principles of the invention and are not intended to limit the scope of protection of the invention.

It should be noted that, in the description of the invention, the terms that indicate the direction or positional relationship, such as "upper", "lower", "left", "right", "inner", and "outer", are based on the direction or positional relationship shown in the accompanying drawings, which is merely for ease of description instead of indicating or implying that the device or element must have a particular orientation and be constructed and operated in a particular orientation, and therefore should not be construed as limiting the invention. In addition, the terms "first", "second", "third" and "fourth" are for descriptive purposes only and should not be construed as indicating or implying relative importance.

In order to solve the technical problem that there is a significant limitation in arrangement of a position sensor of a spoiler device in the prior art, the invention provides a spoiler device 1 for a vehicle (not shown). The spoiler device 1 includes: a base holder 10 adapted to be fixed to the vehicle and including a drain recess 11; a linkage assembly 20 arranged in the drain recess 11; an actuator 30 fixed below the base holder 10 and located outside the drain recess 11, the actuator 30 being connected to the linkage assembly 20 by the input shaft 21 and capable of driving the input shaft 21 to rotate; and a position sensor 40 located between the drain recess 11 and the actuator 30, where the position sensor 40 can detect a position of the linkage assembly 20 and send a position signal to a control end (not shown in the figure) of the vehicle, so that the control end controls the actuator 30 to drive the linkage assembly 20 to extend or retract based on the position signal.

In one or more embodiments, the vehicle according to the invention is a battery electric vehicle. In an alternative embodiment, the vehicle according to the invention may alternatively be a fuel vehicle, a hybrid vehicle or any other suitable vehicle. The vehicle is provided with a spoiler device 1. The spoiler device 1 is arranged on a vehicle trunk (not shown in the figure), and can be dynamically adjusted based on a vehicle working condition to change aerodynamic effects, strength, or other performance attributes. When the vehicle is traveling at a high speed, the spoiler device 1 can be lifted adaptively to make air resistance form a downward pressure, and counteract a lift caused by the high speed of the vehicle, so that the vehicle has a better roadholding performance to maintain stability. When the vehicle is at a low vehicle speed, the spoiler device 1 can be lowered or retracted adaptively to avoid adding an excessive pressure to the vehicle.

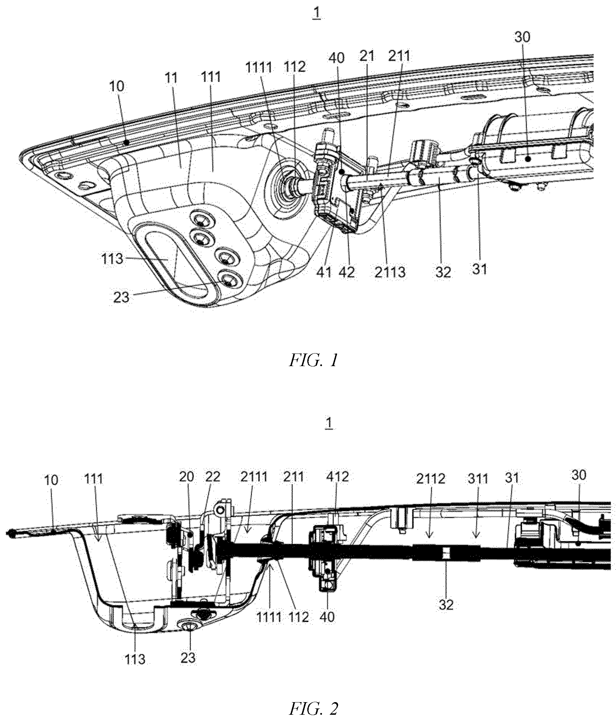

FIG. 1 is a schematic diagram of an embodiment of a spoiler device according to the invention. FIG. 2 is a sectional view of an embodiment of a spoiler device according to the invention. It can be understood that FIGS. 1 and 2 show a structure of a half of the spoiler device 1, while a structure of the other half of the spoiler device 1 is symmetrical to the half illustrated. As shown in FIGS. 1 and 2, in one or more embodiments, the spoiler device 1 includes a base holder 10, a linkage assembly 20, an actuator 30, a position sensor 40, and a spoiler plate (not shown in the figure). The base holder 10 is fixed to the vehicle, and the spoiler plate is fixed above the base holder 10 by the linkage assembly 20. The linkage assembly 20 can extend or retract under the driving of the actuator 30 to implement lifting and lowering of the spoiler plate. The actuator 30 and the position sensor 40 are fixed below the base holder 10. The position sensor 40 can detect the position of the linkage assembly 20 and send a corresponding position signal to the control end (not shown in the figure) of the vehicle. The control end of the vehicle can control the actuator 30 to drive the linkage assembly 20 to move based on the received position signal.

As shown in FIGS. 1 and 2, in one or more embodiments, the base holder 10 is a rectangular plate member, which is fixed to the vehicle trunk and extends in a lengthwise direction of the vehicle trunk. The base holder 10 has a first end portion (not labeled in the figure) and a second end portion (not shown in the figure) that are opposite each other. The first end portion is an end portion at the illustrated left side, and the second end portion is an end portion at the right side opposite the illustrated first end portion 12, which is not shown in the drawing.

Still referring to FIGS. 1 and 2, the base holder 10 is provided with a drain recess 11. The drain recess 11 includes a first drain recess 111 and a second drain recess (not shown in the figure). Based on the illustrated orientation, the first drain recess 111 and the second drain recess are arranged in left-right symmetry. The first drain recess 111 is located at the first end portion 12 of the base holder 10 and extends downward from the base holder 10 to form a bowl-shaped structure. A bottom of the first drain recess 111 is provided with a drain hole 113. The drain hole 113 is of an oval-shaped structure. In one or more embodiments, a drain pipe (not shown in the figure) is connected to the drain hole 113 to drain accumulated water in the first drain recess 111. A right side wall (not labeled in the figure) of the first drain recess 111 is provided with a first recess through-hole 1111, such that a first input shaft 211 of the linkage assembly 20 can extend into the first drain recess 111 through the first recess through-hole 1111 and be connected to a first linkage mechanism 22 in the first drain recess 111. A first sealing ring 112 is further arranged between the first recess through-hole 1111 and the first input shaft 211, so as to prevent the accumulated water in the first drain recess 111 from flowing out through the first recess through-hole 1111 and affecting normal operation of the position sensor 40, the actuator 30, etc. in a dry area outside the first drain recess 111. It can be understood that areas in the first drain recess 111 and the second drain recess are wet areas; and the area outside the drain recess 11 below the base holder 10 is the dry area.

Still referring to FIGS. 1 and 2, it can be understood that the second drain recess is located at the second end portion of the base holder 10 and extends downward from the base holder 10 to form a bowl-shaped structure. A bottom of the second drain recess is provided with a drain hole 113. The drain hole 113 is of an oval-shaped structure. In one or more embodiments, a drain pipe is connected to the drain hole 113 to drain accumulated water in the second drain recess. A left side wall of the second drain recess is provided with a second recess through-hole (not shown in the figure), such that a second input shaft (not shown in the figure) of the linkage assembly 20 can extend into the second drain recess through the second recess through-hole and be connected to a second linkage mechanism (not shown in the figure) in the second drain recess. A second sealing ring is further arranged between the second recess through-hole and the second input shaft, so as to prevent the accumulated water in the second drain recess from flowing out through the second recess through-hole.

As shown in FIGS. 1 to 2, in one or more embodiments, the linkage assembly 20 includes a first linkage mechanism 22 and a second linkage mechanism.

Still referring to FIGS. 1 and 2, the first linkage mechanism 22 is located in the first drain recess 111. In one or more embodiments, the first linkage mechanism 22 is fixedly connected to the first drain recess 111 by four linkage fixing screws 23. In an alternative embodiment, the first linkage mechanism 22 may alternatively be fixedly connected to the first drain recess 111 by less than four or more than four linkage fixing screws 23, as long as it is ensured that the first linkage mechanism 22 is reliably fixed in the first drain recess 111. Alternatively, the first linkage mechanism 22 may alternatively be fixedly connected to the first drain recess 111 by welding, riveting or any other suitable connection process. The second linkage mechanism is located in the second drain recess. In one or more embodiments, the second linkage mechanism is fixedly connected to the second drain recess by four linkage fixing screws 23. In an alternative embodiment, the second linkage mechanism may alternatively be fixedly connected to the second drain recess by less than four or more than four linkage fixing screws 23, as long as it is ensured that the second linkage mechanism is reliably fixed in the second drain recess. Alternatively, the second linkage mechanism may alternatively be fixedly connected to the second drain recess by welding, riveting or any other suitable connection process. Both the first linkage mechanism 22 and the second linkage mechanism are connected to the spoiler plate, and the first linkage mechanism 22 and the second linkage mechanism can simultaneously extend upward to lift the spoiler plate, or simultaneously retract downward to lower the spoiler plate.

Still referring to FIGS. 1 and 2, the linkage assembly 20 is further provided with an input shaft 21. The input shaft 21 includes a first input shaft 211 and a second input shaft. The first input shaft 211 has a first input end 2111 and a second input end 2112 that are opposite each other. The first input end 2111 is an illustrated left end portion of the first input shaft 211, and the first input end 2111 is connected to the first linkage mechanism 22. The second input end 2112 is an illustrated right end portion of the first input shaft 211, and the second input end 2112 is connected to the actuator 30. It can be understood that the second input shaft has a third input end and a fourth input end that are opposite each other, the third input end extends through the second recess through-hole and is connected to the second linkage mechanism, and the fourth input end is connected to the actuator 30.

Still referring to FIG. 1, an input shaft keyway 2113 recessed radially inward from an outer surface of the input shaft is provided in the first input shaft 211. The input shaft keyway 2113 extends from the second input end 2112 of the first input shaft 211 toward the first input end 2111, such that the position sensor 40 can be mounted on the first input shaft 211 through the second input end 2112. In an alternative embodiment, an input shaft flat key may alternatively be arranged on the first input shaft 211, as long as a corresponding magnetic element keyway is provided in a rotating magnetic element 42 of the position sensor 40 to ensure that the rotating magnetic element 42 can rotate synchronously with the first input shaft 211. Alternatively, when the position sensor 40 is arranged on the second input shaft and no position sensor 40 is arranged on the first input shaft 211, the arrangement of the input shaft keyway 2113 in the first input shaft 211 may alternatively be canceled. It can be understood that when the position sensor 40 is arranged on the second input shaft 211, an input shaft keyway 2113 is also arranged on the second input shaft 211.

As shown in FIGS. 1 and 2, the actuator 30 is located below base holder 10. In one or more embodiments, the actuator 30 is fixedly connected to the base holder 10 by a threaded component (not shown in the figure). In an alternative embodiment, the actuator 30 may alternatively be fixedly connected to the base holder 10 by riveting, welding, snap-fit connection, or any other suitable connection process, as long as it is ensured that the actuator 30 is reliably fixed below the base holder 10.

Still referring to FIGS. 1 and 2, in one or more embodiments, the actuator 30 includes, but is not limited to, a driving motor (not shown in the figure), a speed reducer (not shown in the figure) and an output shaft 31. The driving motor is configured to drive the output shaft 31 to rotate. The speed reducer can reduce a rotating speed and increase a torque, such that the output shaft 31 outputs an appropriate torque and drives the first input shaft 211 and the second input shaft 212 to rotate.

Still referring to FIGS. 1 and 2, the output shaft 31 includes a first output end 311 and a second output end (not shown in the figure) that are opposite each other. The output shaft 31 is coaxial with the first input shaft 211, and the first output end 311 is connected to the second input end 2112 of the first input shaft 211 by a first sleeve 32, such that the first input shaft 211 rotates synchronously with the output shaft 31. Specifically, spline structures (not shown in the figure) are arranged at both the first output end 311 of the output shaft 31 and the second input end 2112 of the first input shaft 211, and a corresponding spline groove (not shown in the figure) is provided in the first sleeve 32, such that the first sleeve 32 can connect the output shaft 31 to the first input shaft 211 to implement transmission. It can be understood that the output shaft 31 is also coaxial with the second input shaft, and the second output end is connected to the fourth input end of the second input shaft by a second sleeve (not shown in the figure), such that the second input shaft rotates synchronously with the output shaft 31. Specifically, spline structures are arranged at both the second output end of the output shaft and the fourth input end of the second input shaft, and a corresponding spline groove is provided in the second sleeve, such that the second sleeve can connect the output shaft 31 to the second input shaft to implement transmission.

The actuator 30 is further provided with a first cable harness (not shown in the figure). The actuator 30 can be in signal communication with the control end of the vehicle by the first cable harness to receive an execution instruction sent from the control end and control the output shaft 31 to rotate.

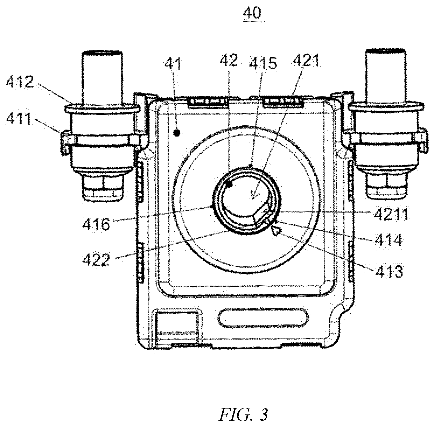

FIG. 3 is a schematic diagram of a position sensor in an embodiment of a spoiler device according to the invention. As shown in FIGS. 1 to 3, in one or more embodiments, the position sensor 40 includes a Hall element module 41 and a rotating magnetic element 42. The rotating magnetic element 42 is provided in the Hall element module 41.

Still referring to FIGS. 1 to 3, the Hall element module 41 is located below the base holder 10, and is fixedly connected to the base holder 10 by a threaded component. As shown in FIG. 3, in one or more embodiments, a fixing portion 411 is arranged on each of an illustrated left side and an illustrated rear side of the Hall element module 41. In an alternative embodiment, any suitable number of fixing portions 411 may alternatively be arranged at any suitable position of the Hall element module 41, as long as the Hall element module 41 can be fixed to the base holder 10. The fixing portion 411 is of a ring structure. In an alternative embodiment, the fixing portion 411 may alternatively be made of any other suitable structure, such as a square fixing hinge with a through-hole, as long as the Hall element module 41 can be fixed to the base holder 10. A module fixing bolt 412 can penetrate through the fixing portion 411 to fix the Hall element module 41 below the base holder 10. In an alternative embodiment, the Hall element module 41 may alternatively be fixed to the base holder 10 by welding, riveting, snap-fit connection, or any other suitable connection process, as long as it is ensured that the Hall element module is reliably connected to the base holder.

Still referring to FIGS. 1 and 2, the Hall element module 41 is further provided with a second cable harness (not labeled in the figure). The Hall element module 41 is in signal communication with the control end of the vehicle by the second cable harness, and sends a detected position signal to the control end.

Still referring to FIGS. 1 to 3, the rotating magnetic element 42 is of an annular structure and has a magnetic element through-hole 421, such that the first input shaft 211 can penetrate through the rotating magnetic element 42. As shown in FIG. 3, in one or more embodiments, a magnetic element flat key 4211 is arranged on an inner surface of the magnetic element through-hole. The magnetic element flat key 4211 structurally matches the input shaft keyway 2113 in the first input shaft 211. In an alternative embodiment, a magnetic element keyway recessed inward is provided in the inner surface of the magnetic element through-hole, as long as an input shaft flat key with a corresponding structure is arranged on the outer surface of the first input shaft 211, so as to ensure that the rotating magnetic element 42 can rotate synchronously with the first input shaft 211.

Still referring to FIG. 3, the Hall element module 41 of the spoiler device 1 according to the invention can integrate multi-channel Hall signals and package the signals together. As shown in FIG. 3, in one or more embodiments, the Hall element module 41 integrates three-channel Hall signals and has an initial position marking point 413, a first position marking point 414, a second position marking point 415, and a third position marking point 416. When the spoiler plate of the spoiler device 1 is in an initial position, that is, in a state of not being lifted close to the vehicle trunk, a pointer mark 422 on the rotating magnetic element 42 points to the initial position marking point 413. When the output shaft 31 drives the first input shaft 211 and the second input shaft to rotate to respectively drive the first linkage mechanism 22 and the second linkage mechanism to extend upward, the spoiler plate is lifted, and the rotating magnetic element 42 rotates synchronously with the first input shaft 211. When the pointer mark 422 points to the first position marking point 414, the Hall element module 41 can send a first position signal to the control end of the vehicle. Similarly, when the pointer mark 422 points to the second position marking point 415, the Hall element module 41 can send a second position signal to the control end of the vehicle. When the pointer mark 422 points to the third position marking point 416, the Hall element module 41 can send a third position signal to the control end of the vehicle. In an alternative embodiment, the Hall element module 41 can alternatively integrate any different suitable number of channels based on actual requirements.

In an alternative embodiment, the position sensor 40 may alternatively be arranged on the second input shaft, as long as the input shaft keyway 2113 is provided in the second input shaft to ensure that the rotating magnetic element 42 of the position sensor 40 can rotate synchronously with the second output shaft. Alternatively, a position sensor 40 may alternatively be arranged on each of the first input shaft 211 and the second input shaft, as long as the position of the linkage assembly 20 can be accurately detected.

Heretofore, the technical solutions of the invention have been described with reference to the preferred implementations shown in the accompanying drawings. However, those skilled in the art may readily understand that the scope of protection of the invention is obviously not limited to these specific implementations. Those skilled in the art could make equivalent changes or substitutions to the related technical features without departing from the principles of the invention, and all the technical solutions after the changes or the substitutions fall within the scope of protection of the invention.

## Claims

1. A spoiler device for a vehicle, comprising:
a base holder adapted to be fixed to the vehicle and comprising a drain recess;
a linkage assembly arranged in the drain recess;
an actuator fixed below the base holder and located outside the drain recess, the actuator being connected to the linkage assembly by an input shaft and capable of driving the input shaft to rotate; and
a position sensor located between the drain recess and the actuator,
wherein the position sensor is capable of detecting a position of the linkage assembly and sending a position signal to a control end of the vehicle, so that the control end controls the actuator to drive the linkage assembly to extend or retract based on the position signal.

2. The spoiler device for a vehicle of claim 1, wherein the position sensor comprises:
a Hall element module fixed to the base holder; and
a rotating magnetic element located in the Hall element module and having a magnetic element through-hole,
wherein the input shaft extends through the magnetic element through-hole, and the rotating magnetic element rotates synchronously with the input shaft.

3. The spoiler device for a vehicle of claim 2, wherein
an input shaft keyway recessed radially inward from an outer surface of the input shaft is provided in the input shaft; and
a magnetic element flat key matching the input shaft keyway is arranged on an inner surface of the magnetic element through-hole.

4. The spoiler device for a vehicle of claim 2, wherein both the Hall element module and the actuator are fixedly connected to the base holder by threaded components.

5. The spoiler device for a vehicle of claim 1, further comprising:
a spoiler plate, wherein the linkage assembly supports the spoiler plate above the base holder, and the actuator is capable of controlling lifting and lowering of the spoiler plate based on the position signal.

6. The spoiler device for a vehicle of claim 5, wherein
the drain recess comprises a first drain recess located at a first end portion of the base holder and a second drain recess located at an opposite second end portion of the base holder;
the linkage assembly comprises a first linkage mechanism located in the first drain recess and a second linkage mechanism located in the second drain recess, and both the first linkage mechanism and the second linkage mechanism are connected to the spoiler plate; and
the input shaft comprises a first input shaft connected to the first linkage mechanism and a second input shaft connected to the second linkage mechanism, and both the first input shaft and the second input shaft are connected to an output shaft of the actuator and synchronously rotatable with the output shaft,
wherein the position sensor is arranged on the first input shaft and/or the second input shaft.

7. The spoiler device for a vehicle of claim 6, wherein
the output shaft has a first output end and a second output end that are opposite each other;
the first input shaft is coaxial with the output shaft and has a first input end and a second input end that are opposite each other, the first input end is connected to the first linkage mechanism, and the second input end is connected to the first output end by a first sleeve; and
the second input shaft is coaxial with the output shaft and has a third input end and a fourth input end that are opposite each other, the third input end is connected to the second linkage mechanism, and the fourth input end is connected to the second output end by a second sleeve.

8. The spoiler device for a vehicle of claim 7, wherein the first drain recess is provided with a first recess through-hole, the second drain recess is provided with a second recess through-hole, the first input end extends through the first recess through-hole, and the third input end extends through the second recess through-hole.

9. The spoiler device for a vehicle of claim 8, wherein a first sealing ring is arranged between the first recess through-hole and the first input end, and a second sealing ring is arranged between the second recess through-hole and the third input end.

10. A vehicle, comprising the spoiler device for a vehicle of any one of claims 1 to 9.
